# EUROPÄISCHE PATENTSCHRIFT

(11) **EP 1 441 220 B1**
(45) Veröffentlichungstag und Bekanntmachung des Hinweises auf die Patenterteilung: **17.11.2010**
(21) Anmeldenummer: 03028937.5
(22) Anmeldetag: 17.12.2003
(51) Int. Cl.: G01N 27/12

(54) **Abgassensorvorrichtung**
Exhaust gas sensor device
Dispositif de détection de gaz d'échappement

(30) Priorität: 23.01.2003 DE 10302738
(43) Veröffentlichungstag der Anmeldung: 28.07.2004
(73) Patentinhaber: Vaillant GmbH, 42859 Remscheid (DE)
(72) Erfinder: Hoefer, Ulrich, 8840 Einsiedeln (CH); Nauer, Arthur, 8836 Bennau (CH); Schönbächler, Urs, 8840 Einsiedeln (CH); Vass, Christian, 8842 Unteriberg (CH)
(74) Vertreter: Hocker, Thomas

(56) Entgegenhaltungen:
- EP-A- 0 464 244
- DE-A- 4 310 914
- DE-C- 4 139 721
- US-A- 4 792 433
- US-A- 5 659 127
- HOEFER U ET AL: "GALLIUMOXID GASSENSOREN - VON DER ENTWICKLUNG IN DIE PRODUKTION" VDI BERICHTE, DUESSELDORF, DE, Nr. 1530, 13. März 2000 (2000-03-13), Seiten 75-86, XP009026588 ISSN: 0083-5560

## Beschreibung

Die vorliegende Erfindung betrifft eine Abgassensorvorrichtung mit den Merkmalen des Hauptanspruches sowie eine Verwendung einer solchen Abgassensorvorrichtung.

Bei der unvollständigen Verbrennung von Erdgas in Brennern von Heizanlagen für fossile Brennstoffe kommt es zur erhöhten Emission von Schadstoffen in die Umwelt. Zudem sinkt der Wirkungsgrad des Brenners, was zu einem erhöhten Brennstoffverbrauch führt. Eine suboptimale Verbrennung kann z.B. durch schlecht gewartete Anlagen (Abnutzung, Lecks etc.), oder durch mechanische Blockierung des Ansaugweges auftreten. Auch kann ein eventuell auftretender Unterdruck (z.B. bei Inbetriebnahme von Abzugshauben in energiesparenden und hoch abgedichteten Wohnräumen) im Raum eine unvollständige (fette) Verbrennung unter Entwicklung erhöhter Mengen von CO nach sich ziehen. Als weitere Folge des Unterdrucks ist es sogar möglich, dass Abgase in den Wohnraum hineingelangen und Gesundheitsschäden verursachen. Deshalb ist es ein Ziel der Brenngerätehersteller, durch geeignete Regelkonzepte und unter allen Umständen eine optimale Verbrennung zu gewährleisten.

Zur Sicherstellung einer optimalen Verbrennung bei Gas-Brennwertkesseln wurden in der Vergangenheit unterschiedliche Regelkonzepte entwickelt. Einige von ihnen basieren auf der Konzentrationsmessung von Abgasbestandteilen und der Rückmeldung der entsprechenden Konzentration von z.B. O₂ oder CO an einen Regelkreis. Zur Messung von Sauerstoff stehen auf Zirkonoxid basierende sog. Lambda- Sonden zur Verfügung, die in der KfZ-Industrie weite Verbreitung gefunden haben. Dem im KFZ benutzten Typen gemeinsam ist jedoch ihre Eignung für den Einsatz bei Verbrennungen im kleinen Bereich um λ=1; dort zeigen diese Sensoren eine sinnvoll auswertbare Signaländerung.

Gasbetriebene Brennwertkessel jedoch operieren bei höheren λ-Werten um 1.5. Dort sind die oben beschriebenen konventionellen λ-Sonden nicht mehr geeignet. Vielmehr kommen hier gelegentlich sog. λ-Pumpsonden bzw. Breitbandlambdasonden zum Einsatz, deren grosser Nachteil ist jedoch der konstruktionsbedingt hohe Preis, welcher dazu führt, dass sie wirtschaftlich nur in Grossbrennern und Kraftwerken eingesetzt werden können. Deshalb hat sich dieser Typ bisher nicht flächendeckend im Heimbereich für niedrige Brennerleistungen (bis ca. 50 KW, z.B. Wandheizgeräte) durchsetzen können (hinzu kommt das Problem stark begrenzter Lebensdauer; im Brennerbereich müssen Lambdasonden üblicherweise alle 1 bis 2 Jahre gewechselt werden).

Aus der EP 0 464 244 A1 ist eine Abgassensorvorrichtung mit den oberbegrifflichen Merkmalen des Hauptanspruchs bekannt.

Ferner ist aus der US 4,792,433 ein CO-Gassensor bekannt, welcher innerhalb eines Ausschnitts in einer Trägerplatte gehalten ist und wobei die Trägerplatte einen elektrischen Kontaktbereich aufweist.

Zum weiteren Stand der Technik wird auf die DE 43 10 914 A1, US 5,659,127 sowie "Galliumoxid Gassensoren - von der Entwicklung in die Produktion", VDI Berichte 1530, U. Hoefer et al verwiesen.

In erfindungsgemäß vorteilhafter Weise beschreibt die Erfindung einen kostengünstigen und langzeitstabilen Gassensor (Herstellkosten in grossen Stückzahlen um 10 Euro, Standzeiten bis zu 10 Jahren entsprechend 30.000 Stunden), der in der Lage ist, unverbrannte bzw. unvollständig verbrannte Kohlenwasserstoffe wie CO im Abgas hinreichend genau zu Regel- und Warnzwecken zu bestimmen. Zwar existieren bereits Gassensoren dieser Preiskategorie auf Basis halbleitender Metalloxide (z.B. SnO₂), allerdings sind diese im Abgas von Feuerungsanlagen nicht stabil. Es müssen die besonderen Anforderungen im Abgas eines Brennwertkessels berücksichtigt werden, wie kondensierende Feuchte und Temperaturen bis 120°C in saurem, aggressiven Milieu und Restsauerstoffgehalte bis unter 0.1 vol.%. Bisherige Metalloxidsensoren sind hierfür nicht geeignet, da sie zum einen eine beträchtliche Querempfindlichkeit zu Feuchte aufweisen und zum anderen bei niedrigen Sauerstoffgehalten in der Atmosphäre chemisch umgewandelt (reduziert) werden und somit kein stabiles auswertbares Signal liefern. Zudem werden bisherige Metalloxidsensoren bei Temperaturen bis ca. 300°C betrieben, wodurch Russ und andere Bestandteile im Abgas zu einer "Erblindung" des Sensor führen können. Generell wesentlich und wertbestimmend für die vorliegende Erfindung ist die Schwierigkeit der Realisierung einer elektrischen Messtechnik in kondensierenden sauren Medien, in denen prinzipbedingt offene und ungeschützte leitfähige Anschlüsse vorliegen.

Seit einigen Jahren ist nun mit Galliumoxid ein weiteres Metalloxid bekannt, welches Eigenschaften besitzt, die erfindungsgemäß die genannten Nachteile überwinden kann. Es wird bei Sensortemperaturen bis 850°C betrieben (muss daher elektrisch beheizt werden) und kann somit nicht durch Russ verschmutzen (vollständige Verbrennung von Russ an der Oberfläche des Sensors). Es ist nur wenig feuchtequerempfindlich und auch in Atmosphären mit niedrigen Restsauerstoffgehalten stabil. Das sensorische Prinzip beruht auf einer Leitfähigkeitsänderung des Materials (Ga₂O₃) bei Kontakt mit dem zu detektierenden Gas (hier: unverbrannte Kohlenwasserstoffe). Ga₂O₃-Gassensoren sind grundsätzlich Mischgassensoren, die durch spezifische Variation der Oberflächenmorphologie, Betriebstemperatur, katalytisch wirksame Filterschichten und Dotierung im günstigen Fall bevorzugte Gasreaktion zeigen. Ihr Vorteil liegt in der thermodynamischen Stabilität der aktiven Schichten bis hin zu sehr hohen Temperaturen (900°C), die Stabilität gegenüber Feuchte und einer Vielzahl von Laugen und Säuren. Gerade die Kombination aus technischer Stabilität, einfacher Verarbeitung und niedrigem Preis qualifiziert Ga₂O₃ für die flächendeckende Anwendung in Brennwertkesseln.

Gleichwohl behinderte bisher eine massenweise Verwendung der Sensoren in gasbefeuerten Brennwertkesseln der Umstand, dass dieses neue Material zwar sehr stabil in Feuerungsabgasen ist, aber die hohe und aggressive Feuchte eine zuverlässige (elektronische) Auswertung unmöglich machte. Prinzipbedingt muss ein entsprechender Sensor frei in der zu messenden Atmosphäre angeordnet sein. Dies bedingt zudem das Offenliegen der elektrischen Zuleitungen. Durch Abgaskondensat kommt es jedoch in der Regel zu Kriechströmen und Zerstörung durch Elektrolyse an den elektrischen Anschlüssen am Sensor und somit zu erratischen Signalen. Zudem werden viele (auch Gehäuse-) Materialien durch das aggressive Medium angegriffen. Die vorliegende Erfindung beschreibt nun einen Sensoraufbau, der es erstmals ermöglicht, Ga₂O₃-Gassensoren in heissen mit gesättigter und saurer Luftfeuchte beaufschlagten Abgasen zuverlässig elektronisch zu betreiben und auszuwerten. Durch die niedrigen Herstellungskosten und die langzeitstabile Gehäuse Konstruktion kann dieser Sensor nun erstmals flächendeckend in Haushalten, zur Optimierung von Verbrennungsprozessen und damit zur Reduzierung von Schadstoffen, eingesetzt werden.
Konkret wird durch die erfindungsgemäße Ausbildung der Trägeranordnung sowie die Passivierung der elektrischen Zuleitungen vorteilhaft erreicht, dass einerseits der Metalloxid-Gassensor flexibel und vorteilhaft in einem Abgasstrom insbesondere auch eines (Kleinleistungs-) Heizungs- bzw. Brennersystems benutzt werden kann, andererseits jedoch die Zerstörungs- bzw. Korrosionsgefahr durch das agressive Abgas, was ein Schwerpunkthindernis für eine entsprechende Nutzung bislang gewesen ist, vermieden werden kann.

Es hat sich dabei im Rahmen der Erfindung als besonders vorteilhaft herausgestellt, dass das Trägerelement plattenförmig ausgebildet ist und der Gassensor als Galliumoxid-Gassensor in einem entsprechenden Ausschnitt, einem Durchbruch oder einer Ausnehmung in dieser Platte angeordnet ist. Zum einen ist es dann von der Erfindung mitumfasst, die (als freie Drähte) den Gassensor mit dem Trägerelement verbindenden elektrischen Zuleitungen erfindungsgemäß zu passivieren, zum anderen ist erfindungsgemäß vorgesehen, eine geeignet mittels einer Polymer-, Glas- oder vergleichbaren Beschichtung versehene Leiterbahnstruktur (zusätzlich oder äquivalent fällt hierunter erfindungsgemäß auch eine in einer Multilayer-Leiterplatte liegende, durch entsprechend aufliegende Leiterplattenschichten geschützte Innen-Leiterschicht) erfindungsgemäß zu passivieren, so dass durchgängig bis zu der zusätzlich weiterbildungsgemäß vorgesehenen mechanischen Barriere der erfindungsgemäße Korrosionsschutz besteht.

Während sich die erfindungsgemäße Vorrichtung besonders günstig zur Verwendung für Heizungs-, und dort insbesondere Brennwertsysteme eignet (wo bislang, gerade für den Kleinleistungsbereich, leistungsfähige und preisgünstige Sensorsysteme nicht zur Verfügung stehen), ist der potentielle Einsatzbereich der vorliegenden Erfindung darauf nicht beschränkt. Vielmehr erstreckt sich die vorliegende Erfindung auf sämtliche Abgas-Messanwendungen, bei welchen, wie erfindungsgemäß realisiert, äußerst preisgünstige Fertigbarkeit (und damit Großserientauglichkeit) mit höchstmöglicher Resistenz gegen schädliche Abgaseinflüsse vorteilhaft kombiniert werden können.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: den prinzipiellen Aufbau eines Galliumoxid-Gassensors (ohne Gehäuse), wie er als aus dem Stand der Technik bekannt vorausgesetzt wird und
- Fig. 2, 3:: zwei Ansichten (Draufsicht ohne bzw. mit Passivierung), welche die Abgassensorvorrichtung gemäß einer bevorzugten Ausführungsform der Erfindung als in einem plättchenförmigen Trägerelement montiertes Metalloxid-Sensorelement, welches mit passivierten Zuleitungen kontaktiert ist, verdeutlichen;
- Fig. 4:: eine Schnittansicht einer erfindungsgemäßen Sensorvorrichtung mit umgebendem Gehäuse, zum Verdeutlichen der gemäß einem Ausführungsbeispiel der Erfindung vorgesehenen, zusätzlich vergossenen Barriere zwischen Abgasraum und Zuleitungs- bzw. Anschlussraum;
- Fig. 5:: Signal-Zeitdiagramme zum Verdeutlichen des Signalverhaltens der erfindungsegmäßen Sensorvorrichtung bei der Messung von CO bzw. O₂ als Sensorspannung über der Zeit;
- Fig. 6:: ein schematisches Kennliniendiagramm mit der Signalstärke der erfindungsgemäßen Sensorvorrichtung in Abhängigkeit von der Kohlenmonoxidkonzentration, gemessen im Abgas eines Brennwertkessels.

Im Abgas von gasbetriebenen Brennwertkesseln herrschen Temperaturen bis 120°C und hohe absolute Luftfeuchten. Bei der vollständigen, mit Luftüberschuss betriebenen (realen) Verbrennung von Methan (Hauptbestandteil von Erdgas) entsteht im wesentliche Wasserdampf und CO₂ gemäss der chemischen Reaktion:

*CH*₄ + 2*O*₂ + 8*N*₂ + *xO*₂ + 4*xN*₂*→* 2*H*₂*O* + *CO*₂ + 8*N*₂ + *xO*₂ + 4*xN*₂ *.*

Hierbei beschreibt x den Luftüberschuss. Wird die Verbrennung z.B. mit einem Luftüberschuss von 4.5% O₂ betrieben, so enthält das Abgas ca. 14% Wasser. Der Taupunkt, also die Temperatur unter der die Feuchte im Abgas anfängt auszukondensieren, beträgt dann etwa 53°C. Haben nun Teile des Sensors, z.B. die Zuleitungen, eine geringere Temperatur, so kondensiert Feuchte in grossen Mengen an diesen Teilen aus. Das Kondensat ist zudem sehr sauer und aggressiv (der saure pH-Wert entsteht im Abgas einer realen Verbrennung durch Stickoxide). Die typische Zusammensetzung des Kondensats in Brennwertkessel ist in Tabelle 1 beschrieben:

**Tabelle 1:**

| **Typische Zusammensetzung des Kondensats in Brennwertertkesseln. Stoffangaben in mg/l.** | | | |
|---|---|---|---|
| | **Mittelwert** | **Max** | **Min** |
| pH - Wert | 3,7 | 10,1 | 2 |
| elek Leitf µS/cm | 415,5 | 5250 | 10 |
| Gesamthärte °dH | 2,9 | 7,2 | 0,4 |
| Karbonathärte °dH | 2,2 | 2,8 | 2,1 |
| Cadmium | 0,1 | 0,8 | 0,01 |
| Silizium | 1,5 | 129 | 0,01 |
| Aluminium | 38,3 | 4007 | 0,01 |
| Ammonium | 1,6 | 2,5 | 1 |
| Calcium | 1,9 | 65,21 | 0,01 |
| Magnesium | 1,0 | 56,5 | 0,01 |
| Blei | 0,2 | 3 | 0,01 |
| Kupfer | 1,8 | 201,5 | 0,01 |
| Eisen | 9,2 | 488,7 | 0,01 |
| Nickel | 1,1 | 319,2 | 0,01 |
| Mangan | 0,2 | 10,44 | 0,01 |
| Zink | 0,6 | 44,8 | 0,008 |
| Zinn | 0,1 | 3,2 | 0,01 |
| Chrom | 1,7 | 95,6 | 0,01 |
| Silber | 1,5 | 4,1 | 0,01 |
| Chlorid | 5,8 | 365,1 | 0,01 |
| Natrium | 97,2 | 152 | 0,55 |
| Nitrat | 130,7 | 4411 | 0,1 |
| Nitrit | 3,9 | 57 | 0,016 |
| Sulfat | 43,3 | 3083 | 0,1 |
| Phosphat | 0,6 | 8,73 | 0,05 |
| Fluorid | 0,3 | 6,52 | 0,08 |

Ga₂O₃-Gassensoren sind sogenannte Leitfähigkeitssensoren. Die Auswertung erfolgt über Messung der elektrischen Leitfähigeit. Der elektrische Widerstand eines solchen Sensors liegt im mehrere hundert Kilo-Ohm- bis Meg-Ohm-Bereich. Kriechströme, die durch das saure Kondensat auftreten könnnen, liegen dann oft in der Grössenordnung der Messströme und erzeugen ein nicht interpretierbares Fehlsignal. Zudem treten durch den Stromfluss in diesem sauren Medium Elektrolyseeffekte auf, die nachfolgend elektrische Zuleitungen zerstören; es kommt zum Sensorausfall. Der folgende Aufbau für Metalloxidsensoren verhindert sowohl die durch Kondensat entstehende Querleitfähigkeit und die damit verbundene Unzuverlässigkeit des Signals, als auch eine Zerstörung des Sensors.

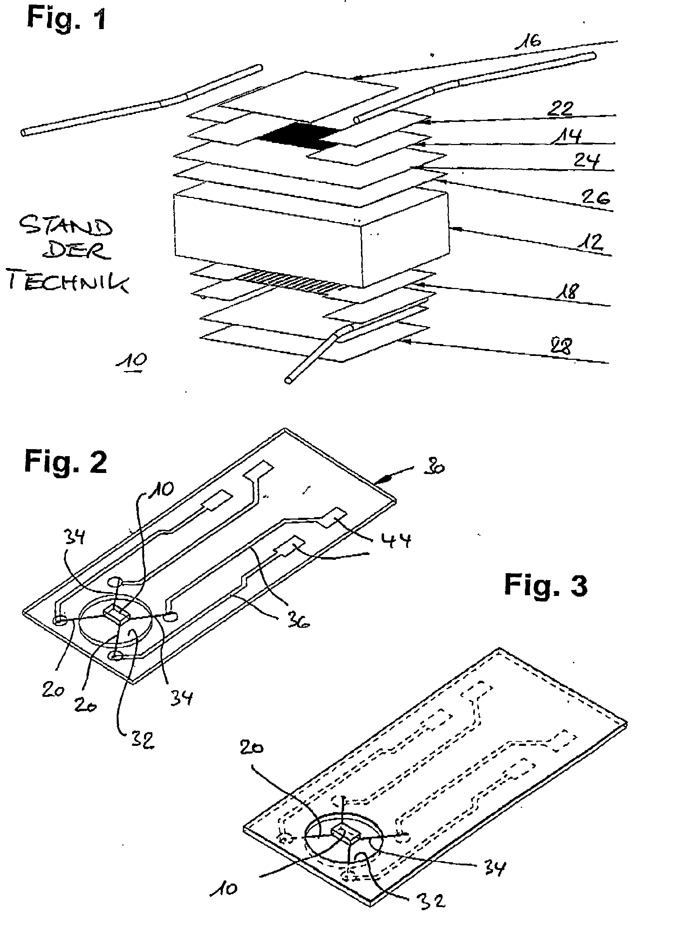

Konkret verdeutlicht die Fig. 1 den Aufbau eines Galliumoxid-Gassensors, wie er beispielsweise auch in "U. Hoefer, A. Nauer, J. Frank und M. Fleischer, GALLIUMOXID GASSENSOREN - VON DER ENTWICKLUNG IN DIE PRODUKTION, Proc. 10. GMA/TG Fachtagung Sensoren und Meßsysteme, 13.-14.3.00 in Ludwigsburg", beschrieben ist. So besteht der in Fig. 1 gezeigte Ga₂O₃-Sensor 10 auf der Oberseite eines keramischen Trägersubstrats 12 (Al₂O₃) hauptsächlich aus einer Elektroden-Kammstruktur 14 (sog. Interdigitalelektroden, IDK), auf welcher die sensitive Schicht aus Galliumoxid 16 abgeschieden ist. Die IDK dienen zur Erfassung der Leitfähigkeitsänderung.

Auf der Rückseite befindet sich ein Heizmäander 18, der durch Stromfluss den Sensorchip auf Temperaturen bis ca. 850°C heizt. Die Elektroden der Heizvorrichtung 18 werden über dünne Drähte (vgl. Zuleitungsdrähte 20 in Fig. 2, 3) durch ein Schweißverfahren kontaktiert.

Die Fig. 2 bzw. 3 verdeutlichen, wie der in Fig. 1 gezeigte Galliumoxidchip (dieser weist zusätzlich noch eine der Galliumoxidschicht 16 zugeordnete Kontaktverstärkung 22, eine Haftvermittlerschicht 24, eine Diffusionsbarriere 26 sowie eine Passivierung 28 auf) in einem flachen Trägerplättchen 30 gehalten ist, und zwar innerhalb eines einends dort gebildeten Durchbruchs 32, innerhalb dessen der Chip 10 von Heizungs-Zuleitungsdrähten 20 bzw. Signalzuleitungen 34 gleichzeitig mechanisch gehalten und elektrisch kontaktiert wird.

Sowohl die diesen Drähten 20, 34 auf einer flachen Außenseite der Trägerplatte 30 zugeordneten Leiterbahnen 36, als auch die Zuleitungsdrähte 20, 34 selbst sind gemäß der Erfindung mit einer wasserdichten und säureunempfindlichen Passivierung (typischerweise ein Polymerlack oder eine Glasur) versehen. Zwar befindet sich durch die hohe Betriebstemperatur des Chips dieser immer oberhalb des Taupunktes im Abgas (womit eine Kondensation direkt am Chip 10 ausgeschlossen ist), jedoch befinden sich alle elektrischen Zuleitungen auf Gehäuse- bzw. Umgebungs- bzw. Abgastemperatur, wo es dann im ungeschützten Fall zu Kondensation, unerwünschtem Stromfluss über die Zuleitungen und mithin zu Fehlsignalen und Zerstörung kommen würde.

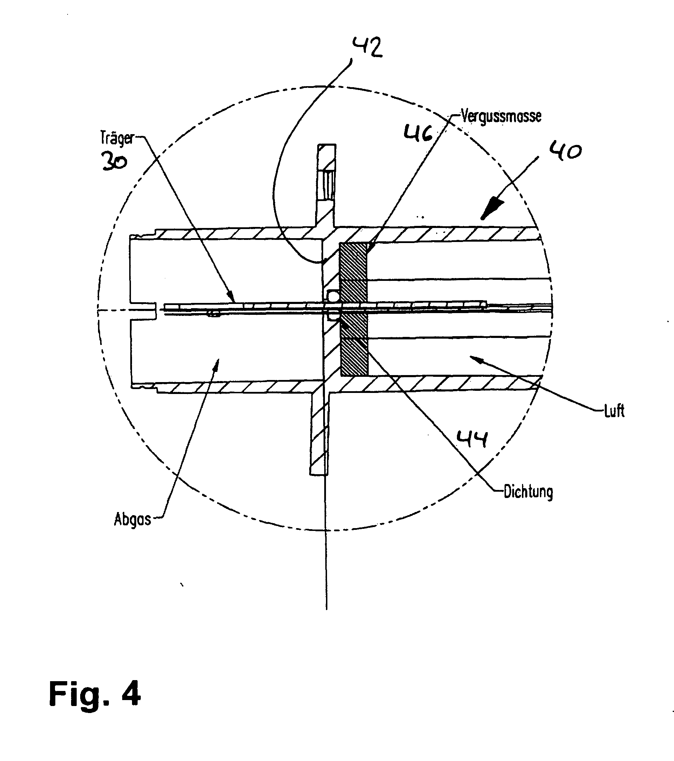

Fig. 4 verdeutlicht, wie die Fig. 2 bzw. 3 gezeigte Trägerplatte 30 in ein Gehäuse 40 so eingebettet ist, dass einends (der linke Bereich der Fig. 4 verdeutlicht den Abgasraum) das zu messende Gas die Trägerplatte 30 mit eingebettetem Sensorelement 10 kontaktieren kann, anderenends, getrennt durch eine gleichzeitig das Plättchen 30 mechanisch tragende, einstückig mit dem Gehäuse 40 gebildete Wand 42, der externe Kontaktbereich der Leiterbahnen 36 mit entsprechend zugeordneten Kontaktflächen 44 liegt. Die mittels einer Dichtung 45 zusätzlich unterstützte und durch eine geeignete säure- bzw. wasserfeste Vergussmasse 46 erreichte mechanische Verstärkung und Abdichtung sorgt vollends dafür, dass die elektrischen Zuleitungen auf der Seite der Kontaktabschnitte 44 gasdicht und korrosionssicher vom Abgasraum (linker Bereich der Fig. 4) getrennt sind.

Je nach Einsatz- und Montagebedingungen wird dann das ledilich exemplarisch in Fig. 4 gezeigte Gehäuse 40 geeignet gestaltet und angepasst, so dass die so realisierte Sensorvorrichtung in der Lage ist, störungsunempfindlich, kontinuierlich und mit langen Lauf- und Standzeiten die Verbrennungsqualität zu messen.

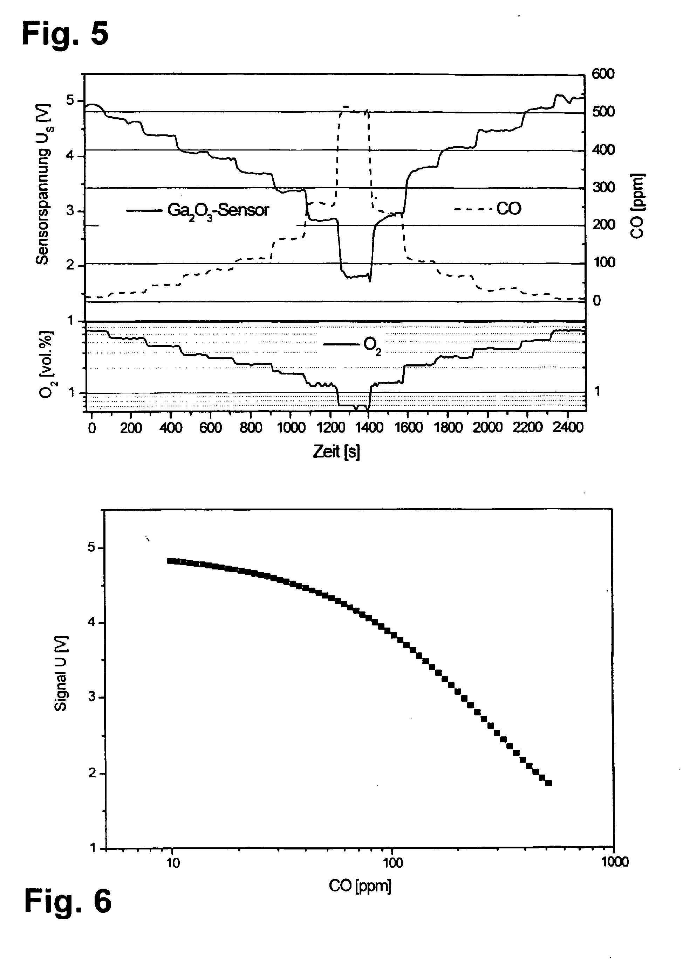

Lediglich ergänzend und zur Illustration ist mit den Fig. 5 und 6 verdeutlicht, dass eine gute und konstante Signalqualität, mithin also eine gute Voraussetzung für diese Ziele, mit dem gezeigten geringen Aufwand erreichbar ist.

Die vorliegende Erfindung ist nicht auf die beschriebenen Ausführungsbeispiele beschränkt; so bieten sich insbesondere auch andere Realisierungsformen für das Trägerelement und/oder die Zuleitungsdrähte und Leiterbahnen an, insbesondere auch eine Realisierung etwa über ein Multilayer-Trägerplättchen, bei welchem die Passivierung der eigentlichen Leiterbahnen des Trägers bereits dadurch erfolgt, dass diese beidseits von Leiterplattenmaterial in der Art einer Passivierung umschlossen sind.

Auch ist der vorliegende, bevorzugte Anwendungsfall "Heizungsanlage" bzw. "Brennwertanlage" nicht der alleinige Bereich, wo die vorliegende Erfindung sinnvoll eingesetzt werden kann, vielmehr erstrecken sich weitere bevorzugte Anwendungsfelder auf Ölbrenner, Holzbrenner (Pellets), Biogasverbrennung, Standheizungen in Automobilen sowie Kochherde (Überwachung der Pyrolyse bei erhöhter Temperatur), Gargutüberwachung (Steuerung des Backvorgangs durch Messung der Ausgasungen; hier tritt viel Feuchte bei hohen Temperaturen auf; Dunstabzughaubensteuerung).

## Patentansprüche

1. Abgassensorvorrichtung mit
einem bei einer Betriebstemperatur oberhalb von 500 °C betreibbaren, elektrische Zuleitungen (20, 34) in Form von Heizungszuleitungen sowie Signalzuleitungen aufweisenden Ga2O3-Gassensor (10) in einem Gehäuse (40),
der auf einer flachen Trägeranordnung (30) vorgesehen und mit dieser in einen zu messenden Abgasstrom einbringbar ausgebildet ist,
**dadurch gekennzeichnet, dass**
die Trägeranordnung als Trägerplatte (30) ausgebildet ist, die einends an einem Eingriffsabschnitt für einen Abgasstrom eine Aufnahme (32) für den Gassensor (10) in Form einer Ausnehmung, eines Ausschnitts oder Durchbruchs aufweist,
auf der Oberfläche der Trägerplatte (30) die eine Passivierung gegen eine korrosive Wirkung des Abgases aufweisenden elektrischen Zuleitungen (20, 34, 36) geführt
und anderenends des Eingriffsabschnitts, getrennt durch eine Wand (42) des Gehäuses (40) als mechanische Barriere, an einem Kontaktbereich elektrisch kontaktierbar so ausgebildet sind, dass die elektrischen Zuleitungen auf der Seite des Kontaktbereichs gasdicht und korrosionssicher von einem Abgasraum getrennt sind.

2. Vorrichtung nach Anspruch 1, **dadurch gekennzeichnet, dass** ein Material für die Trägerplatte aus der Gruppe ausgewählt ist, die aus Keramik, Teflon, FR4 oder Kombinationen von diesen besteht.

3. Vorrichtung nach Anspruch 1 oder 2, **dadurch gekennzeichnet, dass** die elektrischen Zuleitungen abschnittsweise als den Gassensor mit auf dem Trägerelement gebildeten, planen Zuleitungsabschnitten (36) verbindende Drahtabschnitte (20, 34) ausgebildet sind.

4. Vorrichtung nach einem der Ansprüche 1 bis 3, **dadurch gekennzeichnet, dass** die Wand (42) aus einem Metall- und/oder Kunststoffmaterial realisiert und durch eine Schicht (46) aus einem wasser- oder säureresistenten Dicht-oder Vergussmaterial verstärkt ist.

5. Verwendung des Abgassensors nach einem der Ansprüche 1 bis 4 zur Steuerung einer Verbrennungs- und/oder Heizungsanlage, insbesondere für Brennwertkesselanlagen und/oder Anlagen mit einer Brennerleistung von < als 50 Kilowatt.

## Claims

1. Exhaust gas sensor device having
electrical feed cables (20, 34) in the form of heater feed cables which are capable of operation at an operating temperature above 500° C, and Ga203 gas sensor (10) with signal feed cables in a housing (40),
which is provided on a flat carrier arrangement (30) and which is designed to be able to be introduced together with said carrier into an exhaust gas stream to be measured,
**characterised in that**
the carrier arrangement is designed in the form of a carrier plate (30) which has a mounting (32) for the gas sensor (10) in the form of a recess, cut-out or aperture at one end on an interaction section for an exhaust gas stream,
the electrical feed cables (20, 34, 36), which are passivated against a corrosive effect of the exhaust gas, are routed on the surface of the carrier plate (30)
and, in a contact area at the other end of the interaction section separated by a wall (42) of the housing (40) as a mechanical barrier, are designed so that an electrical connection can be made in such a way that the electrical feed cables on the contact area side are separated from an exhaust gas chamber so that they are gas-tight and resistant to corrosion.

2. Device according to Claim 1, **characterised in that** a material for the carrier plate is selected from the group consisting of ceramic, Teflon, FR4 or combinations thereof.

3. Device according to Claim 1 or 2, **characterised in that**, in sections, the electrical feed cables are designed as the wire sections (20, 34) connecting the gas sensor to the flat feed cable sections (36) formed on the carrier element.

4. Device according to one of Claims 1 to 3, **characterised in that** the wall (42) is made from a metal and/or plastic material and is reinforced by a layer (46) of water-resistant or acid-resistant sealing or potting material.

5. Use of the exhaust gas sensor according to one of Claims 1 to 4 for controlling a combustion and/or heating system, in particular for condensing boiler systems and/or systems with a burner capacity of <50 kW.

## Revendications

1. Dispositif de détection de gaz d'échappement comprenant
un capteur de gaz Ga2O3 (10) pouvant fonctionner à une température de service supérieure à 500°C, présentant des conduites d'alimentation électrique (20, 34) sous la forme de conduites d'alimentation de chauffage ainsi que des conduites d'amenée de signaux dans un boîtier (40),
qui est prévu sur un agencement de support plat (30) et est réalisé avec celui-ci de manière à pouvoir être incorporé dans un courant de gaz d'échappement à mesurer,
**caractérisé en ce que**
l'agencement de support est réalisé en tant que plaque de support (30) qui présente à une extrémité sur une section d'engrènement pour un courant de gaz d'échappement un logement (32) pour le capteur de gaz (10) sous la forme d'un évidement, d'une découpe ou d'un percement,
les conduites d'alimentation électrique (20, 34, 36) présentant une passivation contre un effet corrosif du gaz d'échappement sont guidées à la surface de la plaque de support (30)
et réalisées à l'autre extrémité de la section d'engrènement, séparée par une paroi (42) du boîtier (40) en tant que barrière mécanique, de manière à pouvoir être mises en contact électrique sur une zone de contact, de telle sorte que les conduites d'alimentation électrique sont séparées du côté de la zone de contact de manière étanche au gaz et anticorrosive d'un espace de gaz d'échappement.

2. Dispositif selon la revendication 1, **caractérisé en ce qu'**un matériau pour la plaque de support est sélectionné parmi le groupe qui se compose de céramique, téflon, FR4 ou de combinaisons de ceux-ci.

3. Dispositif selon la revendication 1 ou 2, **caractérisé en ce que** les conduites d'alimentation électrique sont réalisées par section en tant que sections de fil métallique (20, 34) reliant le capteur de gaz à des sections de conduite d'alimentation planes (36) formées sur l'élément de support.

4. Dispositif selon l'une quelconque des revendications 1 à 3, **caractérisé en ce que** la paroi (42) est réalisée en un matériau métallique et/ou plastique et est renforcée par une couche (46) en un matériau d'étanchéité ou de scellement résistant à l'eau ou à l'acide.

5. Utilisation du capteur de gaz d'échappement selon l'une quelconque des revendications 1 à 4 pour la commande d'une installation de combustion et/ou de chauffage, notamment pour des installations de chaudière à puissance calorifique et/ou des installations avec une puissance de brûleur < à 50 kilowatts.
